# EUROPEAN PATENT APPLICATION

(11) **EP 4 755 937 A1**
(43) Date of publication of application: **10.06.2026**
(21) Application number: 24849660.6
(22) Date of filing: 02.08.2024
(51) Int. Cl.: C08G 18/12, C08G 18/66, C08G 18/32, C08G 18/48, C08G 18/80, C08L 63/00, C08L 75/04, C09J 163/00

(54) **ISOCYANATE PREPOLYMER COMPOSITION USING ANHYDROSUGAR ALCOHOL-ALKYLENE GLYCOL AND POLYHYDRIC ALCOHOL, END-CAPPED ISOCYANATE PREPOLYMER COMPOSITION PREPARED FROM PREPOLYMER COMPOSITION, IMPACT MODIFIER COMPRISING SAME, EPOXY RESIN COMPOSITION COMPRISING IMPACT MODIFIER, AND ADHESIVE COMPRISING SAME**

(30) Priority: 03.08.2023 KR 20230101827
(71) Applicant: Samyang Innochem Corporation, Gunsan-si Jeonbuk-do 54001 (KR)
(72) Inventor: NOH, Jae Guk, Sejong 30141 (KR); SONG, Gwang Seok, Daejeon 34209 (KR); YOO, Seung Hyun, Daejeon 34073 (KR); IM, Jun Seop, Hwaseong-si Gyeonggi-do 18496 (KR)
(74) Representative: Gleiss Große Schrell und Partner mbB
(86) International application number: PCT/KR2024/011433
(87) International publication number: WO 2025/029093

(57) **Abstract**

The present invention relates to an isocyanate prepolymer composition using anhydrosugar alcohol-alkylene glycol and polyhydric alcohol and uses thereof and, more specifically, relates to: an isocyanate prepolymer composition which is environmentally friendly, which is prepared by subjecting polyisocyanate to a urethane reaction with a polyol composition comprising polyhydric alcohol, polyether polyol, and anhydrosugar alcohol-alkylene glycol that is an alkylene oxide adduct of anhydrosugar alcohol, and, in particular, which can be used to prepare an end-capped isocyanate prepolymer composition, which in turn can be used as an impact modifier that can be applied to an adhesive epoxy resin composition so as to improve the T-peel strength and impact strength (particularly, impact strength at room temperature) thereof; an end-capped isocyanate prepolymer composition using the prepolymer composition; an impact modifier comprising same; an epoxy resin composition comprising the impact modifier; and an adhesive comprising same.

## Description

### TECHNICAL FIELD

The present invention relates to an isocyanate prepolymer composition using anhydrosugar alcohol-alkylene glycol and polyhydric alcohol and uses thereof, and more specifically, it relates to an isocyanate prepolymer composition prepared by urethane reaction of a polyol composition comprising anhydrosugar alcohol-alkylene glycol that is an alkylene oxide adduct of anhydrosugar alcohol, polyether polyol and polyhydric alcohol with polyisocyanate, which is environmentally friendly and particularly can be used to prepare an end-capped isocyanate prepolymer composition useful as an impact modifier that can be applied to an adhesive epoxy resin composition so as to improve the T-peel strength and impact strength (particularly, impact strength at room temperature) thereof, and also relates to an end-capped isocyanate prepolymer composition using the prepolymer composition, an impact modifier comprising the same, and an epoxy resin composition comprising the impact modifier and an adhesive comprising the same.

### BACKGROUND ART

Epoxy resins have excellent heat resistance, mechanical properties, electrical properties and adhesiveness. Utilizing these properties, epoxy resins are used in encapsulating materials for wiring boards, circuit boards, multilayered circuit boards, semiconductor chips, coils, electrical circuits, etc. Epoxy resins are also used as resins for adhesives, paints, and fiber-reinforced resins.

For epoxy resins, extensive use thereof as thermosetting resins can be found in various applications. Epoxy resins are also used as thermosetting matrix in prepregs which consist of fibers embedded in the thermosetting matrix. In addition, due to their toughness, flexibility, adhesiveness and chemical resistance, epoxy resins can be used materials for surface coating, bonding, molding and laminating, and various applications thereof can be found in wide and various ranges of industries such as aerospace, automotive, electronics, construction, furniture, green energy and sporting goods.

A wide range of epoxy resins are readily available and can be used according to the reactivity necessary for specific applications. For example, the resins can be solid, liquid or semi-solid, and can have various reactivity according to the intended use. The reactivity of epoxy resin is often measured in terms of their epoxy equivalent, which is the molecular weight of the resin containing a single reactive epoxy group. As the epoxy equivalent is lower, the reactivity of the epoxy resin is higher. Epoxy resin is required to have different reactivities for different applications, but this varies depending on whether or not the resin is present as a matrix in fiber-reinforced prepreg, adhesive coating, or structural adhesive.

However, epoxy resin itself is too brittle and has low strength, and thus its scope of application is limited thereby. To supplement this, rubber additives or thermoplastic polymer additives are used, but such additives do not form chemical bonds with the epoxy resin, resulting in lowering the corrosion resistance and environmental friendliness.

Hydrogenated sugar (also referred to as "sugar alcohol") means a compound obtained by adding hydrogen to the reductive end group in sugar, and generally has a chemical formula of HOCH₂(CHOH)ₙCH₂OH wherein n is an integer of 2 to 5. According to the number of carbon atoms, hydrogenated sugar is classified into tetritol, pentitol, hexitol and heptitol (4, 5, 6 and 7 carbon atoms, respectively). Among them, hexitol having 6 carbon atoms includes sorbitol, mannitol, iditol, galactitol, etc. and in particular, sorbitol and mannitol are very useful materials.

Anhydrosugar alcohol is a material formed by removing one or more molecules of water from inside of the hydrogenated sugar. It has a tetraol form with four hydroxyl groups in the molecule when one molecule of water is removed, and a diol form with two hydroxyl groups in the molecule when two molecules of water are removed, and can be produced by using hexitol derived from starch (for example, Korean Patent No. 10-1079518; Korean Laid-open Patent Publication No. 10-2021-0066904). Because anhydrosugar alcohol is an environmentally friendly material derived from recyclable natural resources, it has received much interest for a long time and researches on its production continue to proceed. Among such anhydrosugar alcohols, isosorbide produced from sorbitol has the widest industrial applicability at present.

Anhydrosugar alcohol can be used in various fields including treatment of heart and blood vessel diseases, patch adhesive, medicaments such as mouthwash, etc., solvents for compositions in the cosmetics industry, emulsifiers in the food industry, etc. In addition, it can increase the glass transition temperature of polymer materials like polyester, PET, polycarbonate, polyurethane, epoxy resin, etc., and improve the strength of such materials. Furthermore, because anhydrosugar alcohol is an environmentally friendly material derived from natural resources, it is very useful in the plastics industry such as bioplastics and the like. It is also known that anhydrosugar alcohol can be used as an adhesive, environmentally friendly plasticizer, biodegradable polymer, and environmentally friendly solvent for water-soluble lacquer. As such, anhydrosugar alcohol is receiving much interest because of its wide applicability, and the level of practical industrial applications thereof is increasing.

Therefore, it is being requested to develop an impact modifier which is prepared by utilizing anhydrosugar alcohol and thus is environmentally friendly, and when added to a structural adhesive containing epoxy resin, can improve the strength of the epoxy resin.

### PROBLEMS TO BE SOLVED

The purpose of the present invention is to provide an isocyanate prepolymer composition, which utilizes anhydrosugar alcohol and thus is environmentally friendly, and particularly can be used to prepare an end-capped isocyanate prepolymer composition useful as an impact modifier that can be applied to an adhesive epoxy resin composition so as to improve the T-peel strength and impact strength (particularly, impact strength at room temperature) thereof, and an end-capped isocyanate prepolymer composition using the prepolymer composition, an impact modifier comprising the same, and an epoxy resin composition comprising the impact modifier and an adhesive comprising the same.

### TECHNICAL MEANS

The first aspect of the present invention provides an isocyanate prepolymer composition prepared by urethane reaction of a polyol composition comprising anhydrosugar alcohol-alkylene glycol, polyether polyol and trihydric or higher polyhydric alcohol with polyisocyanate, wherein, based on the total OH equivalent of the polyol composition, the OH equivalent ratio of the anhydrosugar alcohol-alkylene glycol is more than 0.05 and less than 0.4, the OH equivalent ratio of the polyether polyol is more than 0.2 and less than 0.6, and the OH equivalent ratio of the trihydric or higher polyhydric alcohol is more than 0.2 and less than 0.6, and the NCO equivalent ratio of the polyisocyanate to the total OH equivalent of the polyol composition (total NCO equivalent/total OH equivalent) is more than 1.5 and less than 2.0.

The second aspect of the present invention provides a method for preparing an isocyanate prepolymer composition, comprising a step of urethane reaction of a polyol composition comprising anhydrosugar alcohol-alkylene glycol, polyether polyol and trihydric or higher polyhydric alcohol with polyisocyanate, wherein, based on the total OH equivalent of the polyol composition, the OH equivalent ratio of the anhydrosugar alcohol-alkylene glycol is more than 0.05 and less than 0.4, the OH equivalent ratio of the polyether polyol is more than 0.2 and less than 0.6, and the OH equivalent ratio of the trihydric or higher polyhydric alcohol is more than 0.2 and less than 0.6, and the NCO equivalent ratio of the polyisocyanate to the total OH equivalent of the polyol composition (total NCO equivalent/total OH equivalent) is more than 1.5 and less than 2.0.

The third aspect of the present invention provides an end-capped isocyanate prepolymer composition prepared by reaction of the isocyanate prepolymer composition according to the first aspect of the present invention with an end-capping agent.

The fourth aspect of the present invention provides an impact modifier comprising the end-capped isocyanate prepolymer composition according to the third aspect of the present invention.

The fifth aspect of the present invention provides an epoxy resin composition comprising the impact modifier according to the fourth aspect of the present invention; and epoxy resin.

The sixth aspect of the present invention provides an adhesive comprising the epoxy resin composition according to the fifth aspect of the present invention.

### EFFECT OF THE INVENTION

The isocyanate prepolymer composition according to the present invention is environmentally friendly, and by being used to prepare an end-capped isocyanate prepolymer composition which is then applied to an adhesive epoxy resin composition as an impact modifier, it can remarkably improve the T-peel strength and impact strength (particularly, impact strength at room temperature) of the adhesive epoxy resin, as compared with conventional structural adhesives.

In addition, the isocyanate prepolymer composition according to the present invention can improve the value of biomaterials and contribute to environmental friendliness by using anhydrosugar alcohol, which is an environmentally friendly material, as a polyol raw material.

### CONCRETE MODE FOR CARRYING OUT THE INVENTION

The present invention is explained in more detail below.

### [Isocyanate prepolymer composition and preparation method thereof]

The isocyanate prepolymer composition of the present invention is prepared by urethane reaction of a polyol composition comprising anhydrosugar alcohol-alkylene glycol, polyether polyol and trihydric or higher polyhydric alcohol with polyisocyanate, wherein, based on the total OH equivalent of the polyol composition, the OH equivalent ratio of the anhydrosugar alcohol-alkylene glycol is more than 0.05 and less than 0.4, the OH equivalent ratio of the polyether polyol is more than 0.2 and less than 0.6, and the OH equivalent ratio of the trihydric or higher polyhydric alcohol is more than 0.2 and less than 0.6, and the NCO equivalent ratio of the polyisocyanate to the total OH equivalent of the polyol composition (total NCO equivalent/total OH equivalent) is more than 1.5 and less than 2.0.

In the present invention, based on the total OH equivalent of the polyol composition, if the OH equivalent ratio of the anhydrosugar alcohol-alkylene glycol is 0.05 or less, the molecular chain of the urethane reaction product becomes longer and accordingly the intermolecular entanglement is relatively reduced, and as a result, the T-peel strength of the epoxy resin adhesive-which contains, as an impact modifier, the end-capped isocyanate prepolymer composition prepared utilizing the urethane reaction product-is lowered, and the impact strength at room temperature thereof is also lowered so that unstable crack may occur when measuring the impact strength at room temperature. To the contrary, if the OH equivalent ratio of the anhydrosugar alcohol-alkylene glycol is 0.4 or more, the length of the alkyl chain, which is a soft segment in the structure of the urethane reaction product, is shortened, and as a result, the T-peel strength and the impact strength at room temperature of the epoxy resin adhesive-which contains, as an impact modifier, the end-capped isocyanate prepolymer composition prepared utilizing the urethane reaction product-are lowered.

In an embodiment, based on the total OH equivalent of the polyol composition, the OH equivalent ratio of the anhydrosugar alcohol-alkylene glycol may be, for example, more than 0.05, 0.051 or more, 0.055 or more, 0.06 or more, 0.065 or more, 0.07 or more, 0.075 or more, or 0.08 or more, and it also may be less than 0.4, 0.39 or less, 0.38 or less, 0.37 or less, 0.36 or less, 0.35 or less, 0.34 or less, 0.33 or less, 0.32 or less, 0.31 or less, or 0.3 or less, but it is not limited thereto.

In the present invention, based on the total OH equivalent of the polyol composition, if the OH equivalent ratio of the polyether polyol is 0.2 or less, the T-peel strength and the impact strength at room temperature of the epoxy resin adhesive-which contains, as an impact modifier, the end-capped isocyanate prepolymer composition prepared utilizing the urethane reaction product-are lowered. To the contrary, if the OH equivalent ratio of the polyether polyol is 0.6 or more, the T-peel strength of the epoxy resin adhesive-which contains, as an impact modifier, the end-capped isocyanate prepolymer composition prepared utilizing the urethane reaction product-is lowered, and the impact strength at room temperature thereof is also lowered so that unstable crack may occur when measuring the impact strength at room temperature.

In an embodiment, based on the total OH equivalent of the polyol composition, the OH equivalent ratio of the polyether polyol may be, for example, more than 0.2, 0.21 or more, 0.22 or more, 0.23 or more, 0.24 or more, 0.25 or more, 0.26 or more, 0.27 or more, 0.28 or more, 0.29 or more, or 0.3 or more, and it also may be less than 0.6, 0.59 or less, 0.58 or less, 0.57 or less, 0.56 or less, 0.55 or less, 0.54 or less, 0.53 or less, 0.52 or less, 0.51 or less, or 0.5 or less, but it is not limited thereto.

In the present invention, based on the total OH equivalent of the polyol composition, if the OH equivalent ratio of the trihydric or higher polyhydric alcohol is 0.2 or less, the T-peel strength of the epoxy resin adhesive-which contains, as an impact modifier, the end-capped isocyanate prepolymer composition prepared utilizing the urethane reaction product-is lowered, and the impact strength at room temperature thereof is also lowered so that unstable crack may occur when measuring the impact strength at room temperature. To the contrary, if the OH equivalent ratio of the trihydric or higher polyhydric alcohol is 0.6 or more, the T-peel strength and the impact strength at room temperature of the epoxy resin adhesive-which contains, as an impact modifier, the end-capped isocyanate prepolymer composition prepared utilizing the urethane reaction product-are lowered.

In an embodiment, based on the total OH equivalent of the polyol composition, the OH equivalent ratio of the trihydric or higher polyhydric alcohol may be, for example, more than 0.2, 0.21 or more, 0.22 or more, 0.23 or more, 0.24 or more, 0.25 or more, 0.26 or more, 0.27 or more, 0.28 or more, 0.29 or more, or 0.3 or more, and it also may be less than 0.6, 0.59 or less, 0.58 or less, 0.57 or less, 0.56 or less, 0.55 or less, 0.54 or less, 0.53 or less, 0.52 or less, 0.51 or less, or 0.5 or less, but it is not limited thereto.

In the present invention, if the NCO equivalent ratio of the polyisocyanate to the total OH equivalent of the polyol composition (total NCO equivalent/total OH equivalent) is 1.5 or less, the T-peel strength and the impact strength at room temperature of the epoxy resin adhesive-which contains, as an impact modifier, the end-capped isocyanate prepolymer composition prepared utilizing the urethane reaction product-are lowered. To the contrary, if the NCO equivalent ratio of the polyisocyanate to the total OH equivalent of the polyol composition (total NCO equivalent/total OH equivalent) is 2.0 or more, the T-peel strength of the epoxy resin adhesive-which contains, as an impact modifier, the end-capped isocyanate prepolymer composition prepared utilizing the urethane reaction product-is lowered, and the impact strength at room temperature thereof is also lowered so that unstable crack may occur when measuring the impact strength at room temperature.

In an embodiment, the NCO equivalent ratio of the polyisocyanate to the total OH equivalent of the polyol composition (total NCO equivalent/total OH equivalent) may be, for example, more than 1.5, 1.51 or more, 1.52 or more, 1.53 or more, 1.54 or more, 1.55 or more, 1.56 or more, 1.57 or more, 1.58 or more, 1.59 or more, or 1.6 or more, and it also may be less than 2.0, 1.99 or less, 1.98 or less, 1.97 or less, 1.96 or less, 1.95 or less, 1.94 or less, 1.93 or less, 1.92 or less, 1.91 or less, or 1.9 or less, but it is not limited thereto.

Each component used in the preparation of the isocyanate prepolymer composition of the present invention is described in more detail below.

### Anhydrosugar alcohol-alkylene glycol

The anhydrosugar alcohol-alkylene glycol is an adduct obtained by reacting hydroxyl group(s) at one end or both ends (preferably, both ends) of anhydrosugar alcohol with alkylene oxide.

The anhydrosugar alcohol may be monoanhydrosugar alcohol, dianhydrosugar alcohol, or a mixture thereof. Monoanhydrosugar alcohol is an anhydrosugar alcohol formed by removing one molecule of water from inside of the hydrogenated sugar, and it has a tetraol form with four hydroxyl groups in the molecule. In the present invention, the kind of the monoanhydrosugar alcohol is not especially limited, and it may be preferably monoanhydrohexitol, and more concretely 1,4-anhydrohexitol, 3,6-anhydrohexitol, 2,5-anhydrohexitol, 1,5-anhydrohexitol, 2,6-anhydrohexitol or a mixture of two or more of the foregoing. Dianhydrosugar alcohol is an anhydrosugar alcohol formed by removing two molecules of water from inside of the hydrogenated sugar, and it has a diol form with two hydroxyl groups in the molecule, and can be produced by using hexitol derived from starch. Because dianhydrosugar alcohol is an environmentally friendly material derived from recyclable natural resources, it has received much interest for a long time and researches on its production continue to proceed. Among such dianhydrosugar alcohols, isosorbide produced from sorbitol has the widest industrial applicability at present.

In an embodiment, the anhydrosugar alcohol may be dianhydrosugar alcohol, more specifically dianhydrohexitol, still more specifically 1,4:3,6-dianhydrohexitol, and still more specifically it may be selected from the group consisting of isosorbide, isomannide, isoidide or combination thereof, and preferably it may be isosorbide.

In an embodiment, the alkylene oxide may be a linear alkylene oxide having 2 to 8 carbons or a branched alkylene oxide having 3 to 8 carbons, and more specifically, it may be ethylene oxide, propylene oxide or combination thereof.

In an embodiment, the anhydrosugar alcohol-alkylene glycol may be a compound represented by the following formula 1.

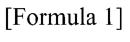

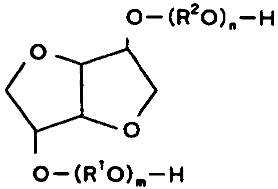

In the above formula 1,
each of R¹ and R² independently represents a linear alkylene group having 2 to 8 carbons or a branched alkylene group having 3 to 8 carbons, and
each of m and n independently represents an integer of 0 to 15, provided that m+n represents an integer of 1 to 30.

More specifically, in the above formula 1,
each of R¹ and R² independently represents ethylene group, propylene group or isopropylene group, and preferably R¹ and R² are the same, and
each of m and n independently represents an integer of 1 to 14, provided that m+n is an integer of 2 to 25, more specifically an integer of 3 to 20, and still more specifically an integer of 5 to 20.

In an embodiment, as the anhydrosugar alcohol-alkylene glycol, the following isosorbide-propylene glycol, isosorbide-ethylene glycol or a mixture thereof may be used.

### [Isosorbide-propylene glycol]

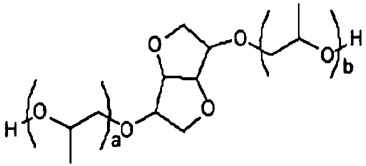

In the above formula, each of a and b independently represents an integer of 0 to 15, provided that a+b represents an integer of 1 to 30, and more specifically, each of a and b may independently represent an integer of 1 to 14, provided that a+b may represent an integer of 2 to 25, more specifically an integer of 3 to 20, and still more specifically an integer of 5 to 20.

### [Isosorbide-ethylene glycol]

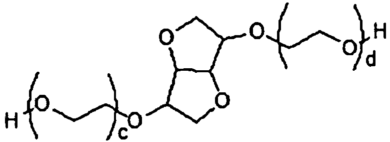

In the above formula, each of c and d independently represents an integer of 0 to 15, provided that c+d represents an integer of 1 to 30, and more specifically, each of c and d may independently represent an integer of 1 to 14, provided that c+d may represent an integer of 2 to 25, more specifically an integer of 3 to 20, and still more specifically an integer of 5 to 20.

In an embodiment, the reaction molar ratio of the alkylene oxide per mole of the anhydrosugar alcohol may be, for example, 1 mole or more, 2 moles or more, 3 moles or more, or 5 moles or more, and it also may be 30 moles or less, 25 moles or less, or 20 moles or less, and for example, it may be 1 to 30 moles, more specifically 2 to 25 moles, and still more specifically 3 to 20 moles, but it is not limited thereto.

In an embodiment, the addition reaction of the anhydrosugar alcohol and the alkylene oxide may be conducted, for example, in a high-pressure reactor capable of pressurization (e.g., pressurization of 3 MPa or more) in the presence of a base catalyst (e.g., hydroxide of alkali metal such as sodium hydroxide or potassium hydroxide, or hydroxide of alkaline earth metal such as calcium hydroxide) at an elevated temperature (e.g., 100°C to 180°C, or 120°C to 160°C) for a certain time (e.g., 1 hour to 8 hours or 2 hours to 4 hours), but it is not limited thereto.

### Polyether polyol

The polyether polyol is a polyether polymer compound having two or more hydroxyl groups in the molecule.

In an embodiment, the polyether polyol may comprise one or more selected from the group consisting of polyalkylene glycol, polytetrahydrofuran, or combination thereof.

In an embodiment, the polyalkylene glycol may be poly(C₁-C₆)alkylene glycol, and more specifically it may be selected from the group consisting of polyethylene glycol, polypropylene glycol, polytetramethylene ether glycol, or combination thereof.

In an embodiment, the number average molecular weight (Mn: unit g/mol) of the polyether polyol may be 500 or more and less than 4,000. More specifically, the number average molecular weight of the polyether polyol may be 500 or more, 600 or more, 700 or more, 800 or more, 900 or more, or 1,000 or more, and it also may be less than 4,000, 3,900 or less, 3,800 or less, 3,700 or less, 3,600 or less, 3,500 or less, 3,400 or less, 3,300 or less, 3,200 or less, 3,100 or less, or 3,000 or less, but it is not limited thereto. Preferably, the number average molecular weight of the polyether polyol may be 500 to 3,000. If the number average molecular weight of the polyether polyol is too lower than the above level, the reaction with polyisocyanate may not proceed, and to the contrary, if it is too higher than the above level, there may be a problem of increasing raw material cost without additional effect of property improvement, resulting in lowering of economic feasibility.

### Trihydric or higher polyhydric alcohol

The trihydric or higher polyhydric alcohol is a compound having three or more hydroxyl groups in the molecule.

In an embodiment, the trihydric or higher polyhydric alcohol may be one or more selected from the group consisting of glycerol, trimethylolpropane, triethanolamine, pentaerythritol, xylitol, sorbitol, or combination thereof, and more specifically, it may be glycerol, triethanolamine or combination thereof, but it is not limited thereto.

### Optionally additional polyol

In an embodiment, the polyol composition may optionally further comprise a polyol component other than the anhydrosugar alcohol-alkylene glycol, polyether polyol and trihydric or higher polyhydric alcohol ("additional polyol component").

In an embodiment, the additional polyol component may be selected from the group consisting of polyester polyol, polycaprolactone diol, polymer polyol obtained by polymerizing such polyol with vinyl compound, or combination thereof. For the vinyl compound, acrylonitrile, styrene, methyl methacrylonitrile, etc. may be used largely, and typically acrylonitrile may be used alone or in a mixture with styrene.

### Urethane reaction of the polyol composition with polyisocyanate

The other aspect of the present invention provides a method for preparing an isocyanate prepolymer composition, comprising a step of urethane reaction of a polyol composition comprising anhydrosugar alcohol-alkylene glycol, polyether polyol and trihydric or higher polyhydric alcohol with polyisocyanate, wherein, based on the total OH equivalent of the polyol composition, the OH equivalent ratio of the anhydrosugar alcohol-alkylene glycol is more than 0.05 and less than 0.4, the OH equivalent ratio of the polyether polyol is more than 0.2 and less than 0.6, and the OH equivalent ratio of the trihydric or higher polyhydric alcohol is more than 0.2 and less than 0.6, and the NCO equivalent ratio of the polyisocyanate to the total OH equivalent of the polyol composition (total NCO equivalent/total OH equivalent) is more than 1.5 and less than 2.0.

In the method for preparing an isocyanate prepolymer composition according to the present invention, the anhydrosugar alcohol-alkylene glycol (including the anhydrosugar alcohol and alkylene oxide used in the production thereof), polyether polyol, and trihydric or higher polyhydric alcohol are the same as described above.

In the present invention, as the polyisocyanate, any polyisocyanate can be used without special limitation as long as it can be used in the preparation of polyurethane. For example, it is possible to use polyisocyanate selected from aliphatic polyisocyanate, cycloaliphatic polyisocyanate, araliphatic polyisocyanate, aromatic polyisocyanate, heterocyclic polyisocyanate or combination thereof, and it is also possible to use unmodified polyisocyanate or modified polyisocyanate or both.

In an embodiment, for example, the polyisocyanate may be aromatic polyisocyanate such as methylenediphenyl diisocyanate (MDI) (e.g., 2,4- or 4,4'-methylenediphenyl diisocyanate), xylylene diisocyanate (XDI), m- or p-tetramethylxylylene diisocyanate (TMXDI), toluene diisocyanate (TDI), di- or tetra-alkyldiphenylmethane diisocyanate, 3,3'-dimethyldiphenyl-4,4'-diisocyanate (TODI), phenylene diisocyanate (e.g., 1,3-phenylene diisocyanate, 1,4-phenylene diisocyanate), naphthalene diisocyanate (NDI), or 4,4'-dibenzyldiisocyanate, etc.; aliphatic polyisocyanate such as hydrogenated MDI (H12MDI), 1-methyl-2,4-diisocyanatocyclohexane, 1,12-diisocyanatododecane, 1,6-diisocyanato-2,2,4-trimethylhexane, 1,6-diisocyanato-2,4,4-trimethylhexane, isophorone diisocyanate (IPDI), tetramethoxybutane-1,4-diisocyanate, butane-1,4-diisocyanate, hexamethylene diisocyanate (HDI) (e.g., 1,6-hexamethylene diisocyanate), dimer fatty acid diisocyanate, dicyclohexylmethane diisocyanate, cyclohexane diisocyanate (e.g., cyclohexane-1,4-diisocyanate) or ethylene diisocyanate, etc.; or combination thereof, but it is not limited thereto.

In another embodiment, for example, the polyisocyanate may be methylenediphenyl diisocyanate (MDI), ethylene diisocyanate, 1,4-tetramethylene diisocyanate, 1,6-hexamethylene diisocyanate, 1,12-dodecane diisocyanate, cyclobutane-1,3-diisocyanate, cyclohexane-1,3-diisocyanate, cyclohexane-1,4-diisocyanate, isophorone diisocyanate, 2,4-hexahydrotoluene diisocyanate, 2,6-hexahydrotoluene diisocyanate, dicyclohexylmethane-4,4'-diisocyanate (HMDI), 1,3-phenylene diisocyanate, 1,4-phenylene diisocyanate, 2,4-toluene diisocyanate, 2,6-toluene diisocyanate, mixed toluene diisocyanate of 2,4-toluene diisocyanate and 2,6-toluene diisocyanate (2,4-/2,6-isomer ratio=80/20), diphenylmethane-2,4'-diisocyanate, diphenylmethane-4,4'-diisocyanate, polydiphenylmethane diisocyanate (PMDI), naphthalene-1,5-diisocyanate or combination thereof, but it is not limited thereto.

More specifically, the polyisocyanate may be methylenediphenyl diisocyanate (MDI), toluene diisocyanate (TDI), hexamethylene diisocyanate (HDI), isophorone diisocyanate (IPDI), or combination thereof.

In an embodiment, the urethane reaction may be conducted in the presence of catalyst such as amine catalyst, organometallic catalyst, or mixture thereof.

The type of the amine catalyst is not especially limited, but preferably one or a mixture of two or more selected from tertiary amine catalysts may be used, and more specifically, one or more selected from the group consisting of triethylene diamine, triethylamine, N-methyl morpholine, N-ethyl morpholine, or combination thereof may be used.

The type of the organometallic catalyst is also not especially limited, but for example, organotin catalyst, more specifically, one or more selected from the group consisting of tin octylate, dibutyltin dilaurate (DBTDL), tin bis[2-ethylhexanoate] or combination thereof may be used.

In an embodiment, the urethane reaction may be conducted at an elevated temperature (e.g., 50 to 100°C, preferably 50 to 80°C) for an appropriate time (e.g., 0.1 to 5 hours, preferably 0.5 to 2 hours), but it is not limited thereto.

### [End-capped isocyanate prepolymer composition, impact modifier, epoxy resin composition, and adhesive]

The present invention also provides an end-capped isocyanate prepolymer composition prepared by reaction of the above-explained isocyanate prepolymer composition of the present invention with an end-capping agent.

The present invention also provides an impact modifier comprising the end-capped isocyanate prepolymer composition.

The present invention also provides an epoxy resin composition comprising the impact modifier; and epoxy resin.

The present invention also provides an adhesive comprising the epoxy resin composition.

In an embodiment, the end-capping agent may be one or more selected from the group consisting of phenolic compound, triazine compound, alcohol compound, amine compound, benzene compound, dicarboxylic acid ester compound, novolac compound, or combination thereof, and more specifically, it may be one or more selected from the group consisting of phenolic compound (e.g., allylphenol, t-butylphenol, phenol, bisphenol A, bisphenol M, bisphenol F, 1,3-dihydroxybenzene, 1,4-dihydroxybenzene, 1,2-dihydroxybenzene, phenolphthalein, o,o'-diallylbisphenol A, phenolphthalein, or combination thereof), benzene compound (e.g., fluoroglucinol, resorcinol, naphthoresorcinol, or combination thereof), dicarboxylic acid ester compound (e.g., gallic acid ester, maleic acid ester, or combination thereof), novolac compound (e.g., cresol novolac) or combination thereof, and still more specifically, it may be phenolic compound.

The epoxy resin can be solid, liquid or semi-solid, and can have various reactivity according to the use for which it is applied. The reactivity of epoxy resin is often measured in terms of the epoxy equivalent, which is the molecular weight of the resin containing a single reactive epoxy group. As the epoxy equivalent is lower, the reactivity of the epoxy resin is higher.

In an embodiment, the epoxy resin may be selected from the group consisting of bisphenol A-epichlorohydrin resin, diglycidyl ether of bisphenol A resin, novolac type epoxy resin, alicyclic epoxy resin, aliphatic epoxy resin, heterocyclic epoxy resin, glycidyl ester type epoxy resin, brominated epoxy resin, bio-derived epoxy resin, epoxidized soybean oil or combination thereof, but it is not limited thereto.

In another embodiment, the epoxy resin may be selected from the group consisting of novolac epoxy resin such as phenol novolac epoxy resin, cresol novolac epoxy resin, etc., bisphenol epoxy resin such as bisphenol A epoxy resin, bisphenol F epoxy resin, etc., aromatic glycidylamine epoxy resin such as N,N-diglycidylaniline, N,N-diglycidyltoluidine, diaminodiphenylmethane glycidylamine, aminophenol glycidylamine, etc., hydroquinone epoxy resin, biphenyl epoxy resin, stilbene epoxy resin, triphenolmethane epoxy resin, triphenolpropane epoxy resin, alkyl-modified triphenolmethane epoxy resin, triazine core-containing epoxy resin, dicyclopentadiene-modified phenol epoxy resin, naphthol epoxy resin, naphthalene epoxy resin, aralkyl epoxy resin such as phenolaralkyl epoxy resin with phenylene and/or biphenylene skeleton, naphtholaralkyl epoxy resin with phenylene and/or biphenylene skeleton, etc., aliphatic epoxy resin such as vinylcyclohexene dioxide, dicyclopentadiene oxide, alicyclic epoxy resin such as alicyclic diepoxy-adipate, etc., or combination thereof, but it is not limited thereto.

In another embodiment, the epoxy resin may be selected from the group consisting of bisphenol F epoxy resin, cresol novolac epoxy resin, phenol novolac epoxy resin, biphenyl epoxy resin, stilbene epoxy resin, hydroquinone epoxy resin, epoxy resin with naphthalene skeleton, tetraphenylolethane epoxy resin, diphenyl phosphate (DPP) epoxy resin, trishydroxyphenylmethane epoxy resin, dicyclopentadiene phenol epoxy resin, diglycidyl ether of bisphenol A ethylene oxide adduct, diglycidyl ether of bisphenol A propylene oxide adduct, diglycidyl ether of bisphenol A, glycidyl ether having one epoxy group such as phenyl glycidyl ether, cresyl glycidyl ether, etc., nuclear hydrogenated epoxy resin which is a nuclear hydrogenation product of these epoxy resins, or combination thereof, but it is not limited thereto.

In an embodiment, the reaction of the isocyanate prepolymer composition and the epoxy resin is a cyclization reaction between the isocyanate prepolymer composition and the epoxy resin, and may be conducted in the presence of catalyst, for example, a basic catalyst such as organic ammonium salt compound, at an elevated temperature (for example, 100 to 200°C, preferably 120 to 180°C) for an appropriate time (for example, 0.1 to 5 hours, preferably 0.5 to 2 hours), but it is not limited thereto.

In an embodiment, the impact modifier of the present invention may consist of the end-capped isocyanate prepolymer composition of the present invention only.

In another embodiment within the scope of achieving the purpose of the present invention, in addition to the end-capped isocyanate prepolymer composition of the present invention, the impact modifier of the present invention may further comprise an additional impact modifier component, and such additional impact modifier component may be, for example, rubber-based impact modifier such as carboxyl terminated butadiene acrylonitrile (CTBN) and amine terminated butadiene acrylonitrile (ATBN), etc., thermoplastic polymer-based impact modifier such as polyethersulfone, polyetherimide, polycarbonate, polyimide, polyamide, acrylonitrile butadiene styrene (ABS), methacrylate butadiene styrene (MBS), etc., or a mixture thereof.

In an embodiment, the additional impact modifier component may be in core-shell form.

In an embodiment, in the total of 100 parts by weight of the epoxy resin composition of the present invention, the impact modifier of the present invention may be comprised in an amount of from 2 parts by weight to 65 parts by weight, more specifically from 5 parts by weight to 60 parts by weight, and still more specifically from 10 parts by weight to 55 parts by weight, but it is not limited thereto.

In an embodiment, in addition to the impact modifier of the present invention and the epoxy resin described above, the epoxy resin composition of the present invention may further comprise one or more selected from curing agent, curing promotor, filler, adhesion promotor or combination thereof.

As the curing agent, conventional curing agent used in this field or art may be used alone or in combination of two or more, and for example, it may be selected from the group consisting of amine compound (e.g., tertiary amine) such as benzyldimethylamine, tris(dimethylaminomethyl)phenol, dimethylcyclohexylamine, etc.; imidazole compound such as 1-cyanoethyl-2-ethyl-4-methylimidazole, 2-ethyl-4-methylimidazole, 1-benzyl-2-methylimidazole, etc.; organophosphine compound such as triphenylphosphine, triphenyl phosphite, etc.; quaternary phosphonium salt such as tetraphenylphosphonium bromide, tetra-n-butylphosphonium bromide, etc.; diazabicycloalkene such as 1,8-diazabicyclo[5.4.0]undecene-7 and organic acid salt thereof, etc.; organometallic compound such as zinc octylate, tin octylate, aluminum acetylacetone complex, etc.; quaternary ammonium salt such as tetraethylammonium bromide, tetrabutylammonium bromide, etc.; boron compound such as boron trifluoride, triphenylborate, etc.; metal halide such as zinc chloride and tin chloride; latent curing agent (e.g., dicyandiamide, high-melting-point dispersion-type latent amine adduct where amine is added to epoxy resin, etc.; microcapsule-type latent curing agent in which the surface of imidazole-based, phosphorus-based, or phosphine-based promotor is coated with a polymer; amine salt-type latent curing agent; thermocationic polymerization-type latent curing agent of high-temperature dissociation-type curing agent such as Lewis acid salt, Bronsted acid salt, etc.), or combination thereof, but it is not limited thereto.

In an embodiment, the curing agent for use may be selected from the group consisting of amine compound, imidazole compound, organophosphorus compound, latent curing agent or combination thereof, but it is not limited thereto.

Since room temperature curing of epoxy resin usually requires a temperature of 15°C or higher and a curing time of 24 hours or more, there are cases where fast curing and low temperature curing are necessary.

Therefore, for the purpose of promoting curing, the epoxy resin composition of the present invention may further comprise a curing promotor. For example, the curing promotor may be urea-based compound, thiourea-based compound, Lewis acid-based compound or mixture thereof, and specifically may be butylated urea, butylated melamine, butylated thiourea, boron trifluoride, etc., but it is not limited thereto.

When a curing promotor is comprised in the epoxy resin composition of the present invention, the use amount thereof may be, based on 100 parts by weight of the total of the epoxy resin and the curing agent, 0.01 to 3 parts by weight, more specifically 0.05 to 2 parts by weight, and still more specifically 0.08 to 1.5 parts by weight, but it is not limited thereto. If the use amount of the curing promotor is too small, the curing reaction of the epoxy resin may not progress sufficiently, which may cause a problem of deterioration in mechanical and thermal properties, and to the contrary, if the use amount of curing promotor is too large, the curing reaction may progress slowly even while the epoxy resin composition is stored, which may cause a problem of increased viscosity.

The filler is mixed with the epoxy resin or the curing agent and used for the main purpose of improving the mechanical properties of the cured product, and generally, as the amount added increases, the mechanical properties improve. The filler may be inorganic filler such as bulking agent such as talc, sand, silica, calcium carbonate, etc.; reinforcing filler such as mica, quartz, glass fiber, etc.; filler for special purpose such as quartz powder, graphite, alumina, Aerosil (for the purpose of imparting thixotropic properties); metallic filler such as aluminum, aluminum oxide, iron, iron oxide, copper, etc. contributing to the thermal expansion coefficient, abrasion resistance, thermal conductivity, adhesiveness; antimony oxide (Sb₂O₃), etc. imparting flame retardancy; barium titanate, organic filler for lightweight such as micro plastic balls (phenolic resin, urea resin, etc.). In addition, as filler with reinforcing properties, various types of glass fiber and chemical fiber cloth can be treated as filler in a broad sense in the manufacture of laminated products. To impart thixotropic property to the resin (Thixotropy refers to the property of having a liquid state when flowing and a solid state when stationary, so that the resin adhered to a vertical surface or by immersion or impregnated into a laminated material does not flow or run off during curing), fine particles with a large unit surface area are used. For example, colloidal silica (Aerosil) or bentonite-based clay is used.

In an embodiment, without being specially limited thereto, the filler may be selected from the group consisting of glass fiber, carbon fiber, titanium oxide, alumina, talc, mica, aluminum hydroxide, calcium carbonate, or combination thereof. The content of the filler in the composition may be 0.01 to 80 parts by weight, or 0.01 to 60 parts by weight, or 0.1 to 50 parts by weight, based on 100 parts by weight of the total of the epoxy resin and the curing agent.

In an embodiment, the adhesion promoter may be polyurethane-modified epoxy resin, polyurethane-modified silyl epoxy resin, or combination thereof, but it is not limited thereto.

The epoxy resin composition of the present invention may further comprise one or more additive components conventionally used in epoxy resin compositions, if necessary.

For example, the additive component for use may be selected from the group consisting of antioxidant, UV absorber, resin modifier, silane coupling agent, diluent, colorant, defoaming agent, antifoaming agent, dispersant, viscosity modifier, gloss modifier, wetting agent, conductivity-imparting agent, or combination thereof.

The antioxidant can be used to further improve the heat-resistant stability of the obtained cured product, and for example, without being specially limited thereto, it may be selected from the group consisting of phenol-based antioxidant (e.g., dibutylhydroxytoluene, etc.), sulfur-based antioxidant (e.g., mercaptopropionic acid derivative, etc.), phosphorus-based antioxidant (e.g., 9,10-dihydro-9-oxa-10-phosphaphenanthrene-10-oxide, etc.) or combination thereof. The content of the antioxidant in the composition may be 0.01 to 10 parts by weight, or 0.05 to 5 parts by weight, or 0.1 to 3 parts by weight, based on 100 parts by weight of the total of the epoxy resin and the curing agent.

For example, without being specially limited thereto, the UV absorber may be selected from the group consisting of benzotriazole-based UV absorber such as TINUBIN P or TINUVIN 234 manufactured by BASF Japan Ltd.; triazine-based UV absorber such as TINUVIN 1577ED; hindered amine-based UV absorber such as CHIMASSOLV 2020FDL, or combination thereof. The content of the UV absorber in the composition may be 0.01 to 10 parts by weight, or 0.05 to 5 parts by weight, or 0.1 to 3 parts by weight, based on 100 parts by weight of the total of the epoxy resin and the curing agent.

For example, without being specially limited thereto, the resin modifier may be flexibility-imparting agent such as polypropylene glycidyl ether, polymerized fatty acid polyglycidyl ether, polypropylene glycol, urethane prepolymer, etc. The content of the resin modifier in the composition may be 0.01 to 80 parts by weight, or 0.01 to 50 parts by weight, or 0.1 to 20 parts by weight, based on 100 parts by weight of the total of the epoxy resin and the curing agent.

For example, without being specially limited thereto, the silane coupling agent may be chloropropyltrimethoxysilane, vinyltrichlorosilane, γ-methacryloxypropyltrimethoxysilane, γ-aminopropyltriethoxysilane, etc. The content of the silane coupling agent in the composition may be 0.01 to 20 parts by weight, or 0.05 to 10 parts by weight, or 0.1 to 5 parts by weight, based on 100 parts by weight of the total of the epoxy resin and the curing agent.

The diluent is mixed with the epoxy resin or the curing agent and used for the main purpose of reducing viscosity, and when used, it plays a role in improving flowability and defoaming, improving penetration into details of parts, or enabling effective addition of fillers. Unlike solvents, the diluent generally does not volatilize, but remain in the cured product when the resin is cured, and are divided into reactive and non-reactive. The reactive diluent has one or more epoxy groups and participates in a reaction to enter the crosslinked structure in the cured product, whereas the non-reactive diluent is only physically mixed and dispersed in the cured product. Commonly used reactive diluents include butyl glycidyl ether (BGE), phenyl glycidyl ether (PGE), aliphatic glycidyl ether (C12-C14), modified-tert-carboxylic glycidyl ester, etc. Commonly used non-reactive diluents include dibutyl phthalate (DBP), dioctyl phthalate (DOP), nonyl phenol, Hysol, etc. In an embodiment, for example, without being specially limited thereto, the diluent may be selected from the group consisting of n-butyl glycidyl ether, phenyl glycidyl ether, glycidyl methacrylate, vinylcyclohexene dioxide, diglycidyl aniline, glycerin triglycidyl ether, or combination thereof. The content of the diluent in the composition may be 0.01 to 80 parts by weight, or 0.01 to 50 parts by weight, or 0.1 to 20 parts by weight, based on 100 parts by weight of the total of the epoxy resin and the curing agent.

As the colorant, pigment or dye can be used to color the resin. The colorant may be conventional pigment such as titanium dioxide, cadmium red, shining green, carbon black, chrome green, chrome yellow, navy blue, shining blue, etc.

In addition, it is possible to use various additives such as defoaming agent and antifoaming agent used for the purpose of removing air bubbles in the resin, dispersant for increasing the dispersion effect between the resin and pigment, wetting agent for improving the adhesion between the epoxy resin and the material, viscosity modifier, gloss modifier for controlling the gloss of the resin, additive for improving adhesiveness, additive for imparting electrical properties, etc.

The method of curing the epoxy resin composition of the present invention is not especially limited, and for example, a conventionally known curing device such as a sealed curing furnace or a tunnel furnace capable of continuous curing, etc. may be used. The heating method used for the curing is not especially limited, and for example, a conventionally known method such as hot air convection, infrared heating, high-frequency heating, etc. may be used.

The curing temperature and curing time may range from 80°C to 250°C and from 30 seconds to 10 hours, respectively. In an embodiment, pre-curing may be conducted at 80°C to 120°C for 0.5 hour to 5 hours, and then post-curing may be conducted at 120°C to 180°C for 0.1 hour to 5 hours. In an embodiment, for short-term curing, curing may be conducted at 150°C to 250°C for 30 seconds to 30 minutes.

In an embodiment, the epoxy resin composition of the present invention may be stored separately as two or more components, for example, a component including the curing agent and the other component including the epoxy resin, and they may be combined prior to curing. In another embodiment, the epoxy resin composition of the present invention may be stored as a thermosetting composition in which the components are blended, and may be provided to curing as is. When stored as a thermosetting composition, it may be stored at a low temperature (typically -40°C to 15°C).

The present invention is explained in more detail through the following Examples and Comparative Examples. However, the scope of the present invention is not limited thereby in any manner.

### EXAMPLES

### <Preparation of anhydrosugar alcohol>

### Preparation Example A1: Preparation of anhydrosugar alcohol using 97 wt% glucose and a thin film distillator

A glucose product having a purity of 97% was subjected to a hydrogenation reaction in the presence of nickel catalyst and under a temperature of 125°C and a hydrogen pressure of 60 atm to obtain 1,819 g of a liquid hydrogenated sugar composition having a concentration of 55 wt% (96 wt% of sorbitol, 0.9 wt% of mannitol, and 3.1 wt% of disaccharide or higher polysaccharide alcohol, based on solid content), which was then concentrated to obtain 1,000 g of a concentrated hydrogenated sugar composition.

1,000 g of the concentrated hydrogenated sugar composition was placed in a batch reactor equipped with a stirrer, heated to 100°C, concentrated, and then 9.6 g of sulfuric acid was added thereto. Thereafter, the internal temperature of the reactor was increased to approximately 135°C, and a dehydration reaction was performed under reduced pressure condition of approximately 45 mmHg for conversion into anhydrosugar alcohol. After the dehydration reaction was completed, the temperature of the reaction product was cooled to below 110°C, and approximately 15.7 g of a 50% aqueous sodium hydroxide solution was added to neutralize the reaction product. Thereafter, the temperature was cooled to below 100°C, and the product was concentrated for more than 1 hour under reduced pressure conditions of 45 mmHg to remove residual moisture and low-boiling-point substances, thereby obtaining approximately 831 g of anhydrosugar alcohol conversion solution. As a result of analyzing the obtained anhydroalcohol conversion solution by gas chromatography, the conversion amount to isosorbide was 71.9 wt%, and through this, the molar conversion rate from sorbitol to isosorbide was calculated to be 77.6%.

831 g of the obtained anhydrosugar alcohol conversion solution was placed in a thin-film distillator (short path distillator, SPD) and distilled. The distillation was performed at a temperature of 160°C and a vacuum pressure of 1 mbar, and approximately 589 g of distillate was obtained (distillation yield: approximately 70.9%). The purity of isosorbide in the distillate was measured to be 96.8%, and the distillation yield of isosorbide calculated therefrom was 95.3%.

The obtained anhydrosugar alcohol distillate and 300 g of acetone (Samjeon Pure Chemicals) as a solvent were placed in a jacket-type reactor and mixed, and then crystallization was performed while lowering the temperature of the mixture from about 50°C to -10°C. After completion of crystallization, dehydration was performed, and anhydrosugar alcohol crystals were recovered from the mixture solution, and the purity of the obtained anhydrosugar alcohol crystal was 99.5% or higher.

### <Preparation of anhydrosugar alcohol-alkylene glycol>

### Preparation Example B1: Preparation of isosorbide-ethylene oxide 5 mole adduct

100 g of isosorbide obtained in Preparation Example A1 and 1.0 g of KOH were placed in a pressurization reactor, and the pressurization and exhaust processes were repeated three times using nitrogen gas. Thereafter, the temperature was raised to 100°C to remove moisture within the reactor, and once all moisture was removed, 150.7 g of ethylene oxide was slowly added to the reactor and the reaction was carried out at 100°C to 140°C for 5 hours. When the reaction was completed, the internal temperature of the reactor was cooled to 50°C, 4 g of Ambosol MP20 was added as an adsorbent to remove the metal, and the mixture was heated again and stirred at a temperature of 100°C to 120°C for 1 to 5 hours to remove the metal ions. At this time, the metal ion content was monitored, and when the metal ions were no longer detected, the internal temperature of the reactor was cooled to 60°C to 90°C, and the residual byproducts were removed through filtration, thereby obtaining 240 g of isosorbide-ethylene oxide 5 mol adduct as a transparent liquid.

### Preparation Example B2: Preparation of isosorbide-propylene oxide 5 mole adduct

Except that 198.7 g of propylene oxide was used instead of 150.7 g of ethylene oxide, the same method as in Preparation Example B1 was performed, thereby obtaining 290 g of isosorbide-propylene oxide 5 mol adduct as a transparent liquid.

### <Preparation of isocyanate prepolymer composition and end-capped isocyanate prepolymer composition>

Example A1: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.5:0.1:0.4, NCO/OH equivalent ratio = 1.7)

2.78 g of the 5-mol isosorbide-ethylene oxide adduct obtained in Preparation Example B1, 75 g of polytetrahydrofuran and 1.84 g of glycerol as polyol components, 28.34 g of isophorone diisocyanate as polyisocyanate component, and 0.3 g of dibutyltin dilaurate (DBTDL) as catalyst were placed in a reactor, and the internal temperature of the reactor was slowly increased to 80°C. After the reaction temperature reached 80°C, a urethane reaction was performed while stirring for 3 hours, thereby preparing an isocyanate prepolymer composition.

After the completion of the urethane reaction, the reactor temperature was adjusted to 60°C, and the NCO content of the isocyanate prepolymer composition was measured. Then, 1.4 equivalents of t-butyl phenol based on 1 equivalent of NCO was added to the reactor. Thereafter, the NCO content was measured, and the reaction was terminated when the NCO content became 0%. After the completion of the reaction, the reaction product was cooled to room temperature, thereby obtaining 100 g of an end-capped isocyanate prepolymer composition.

Example A2: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.3:0.3:0.4, NCO/OH equivalent ratio = 1.7)

Except that the amount of the isosorbide-ethylene oxide 5 mol adduct obtained in Preparation Example B1 was changed from 2.78 g to 8.35 g and the amount of polytetrahydrofuran was changed from 75 g to 45 g, an isocyanate prepolymer composition was prepared by performing the same method as Example A1, and then an end-capping reaction was performed by the same method as Example A1, thereby obtaining 100 g of an end-capped isocyanate prepolymer composition.

Example A3: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.5:0.1:0.4, NCO/OH equivalent ratio = 1.9)

Except that the amount of isophorone diisocyanate was changed from 28.34 g to 31.68 g, an isocyanate prepolymer composition was prepared by performing the same method as in Example A1, and then an end-capping reaction was performed by the same method as in Example A1, thereby obtaining 130 g of an end-capped isocyanate prepolymer composition.

Example A4: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran:isosorbide-propylene oxide 5 mol adduct:glycerol = 0.5:0.1:0.4, NCO/OH equivalent ratio = 1.7)

Except that 3.28 g of the isosorbide-propylene oxide 5 mol adduct obtained in Preparation Example B2 was used instead of the isosorbide-ethylene oxide 5 mol adduct obtained in Preparation Example B1, an isocyanate prepolymer composition was prepared by performing the same method as Example A1, and then an end-capping reaction was performed by the same method as Example A1, thereby obtaining 130 g of an end-capped isocyanate prepolymer composition.

Example A5: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran:isosorbide-propylene oxide 5 mol adduct:glycerol = 0.3:0.3:0.4, NCO/OH equivalent ratio = 1.7)

Except that 9.84 g of the isosorbide-propylene oxide 5 mol adduct obtained in Preparation Example B2 was used instead of the isosorbide-ethylene oxide 5 mol adduct obtained in Preparation Example B1 and the amount of polytetrahydrofuran was changed from 75 g to 45 g, an isocyanate prepolymer composition was prepared by performing the same method as Example A1, and then an end-capping reaction was performed by the same method as Example A1, thereby obtaining 100 g of an end-capped isocyanate prepolymer composition.

Example A6: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran:isosorbide-propylene oxide 5 mol adduct:glycerol = 0.5:0.1:0.4, NCO/OH equivalent ratio = 1.9)

Except that 3.28 g of the isosorbide-propylene oxide 5 mol adduct obtained in Preparation Example B2 was used instead of the isosorbide-ethylene oxide 5 mol adduct obtained in Preparation Example B1 and the amount of isophorone diisocyanate was changed from 28.34 g to 31.68 g, an isocyanate prepolymer composition was prepared in the same manner as in Example A1, and then an end-capping reaction was performed in the same manner as in Example A1, thereby obtaining 100 g of an end-capped isocyanate prepolymer composition.

Example A7: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran:isosorbide-propylene oxide 5 mol adduct:glycerol = 0.5:0.1:0.4, NCO/OH equivalent ratio = 1.6)

Except that 3.5 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 80 g, the amount of glycerol was changed from 1.84 g to 1.96 g and the amount of isophorone diisocyanate was changed from 28.34 g to 28.45 g, an isocyanate prepolymer composition was prepared in the same manner as in Example A1, and then an end-capping reaction was performed in the same manner as in Example A1, thereby obtaining 120 g of an end-capped isocyanate prepolymer composition.

Example A8: Preparation of isocyanate prepolymer composition using a polyol composition comprising polypropylene glycol, isosorbide-ethylene oxide 5 mol adduct and glycerol, and a polyisocyanate (OH equivalent ratio of polypropylene glycol:isosorbide-ethylene oxide 5 mol adduct:glycerol = 0.5:0.1:0.4, NCO/OH equivalent ratio = 1.7)

Except that 75 g of polypropylene glycol was used instead of polytetrahydrofuran and the amount of isophorone diisocyanate was changed from 28.34 g to 28.45 g, an isocyanate prepolymer composition was prepared in the same manner as in Example A1, and then an end-capping reaction was performed in the same manner as in Example A1, thereby obtaining 110 g of an end-capped isocyanate prepolymer composition.

Example A9: Preparation of isocyanate prepolymer composition using a polyol composition comprising polypropylene glycol, isosorbide-propylene oxide 5 mol adduct and glycerol, and a polyisocyanate (OH equivalent ratio of polypropylene glycol:isosorbide-propylene oxide 5 mol adduct:glycerol = 0.5:0.1:0.4, NCO/OH equivalent ratio = 1.7)

Except that 3.28 g of the isosorbide-propylene oxide 5 mol adduct obtained in Preparation Example B2 was used instead of the isosorbide-ethylene oxide 5 mol adduct obtained in Preparation Example B1 and 75 g of polypropylene glycol was used instead of polytetrahydrofuran, an isocyanate prepolymer composition was prepared in the same manner as in Example A1, and then an end-capping reaction was performed in the same manner as in Example A1, thereby obtaining 110 g of an end-capped isocyanate prepolymer composition.

Example A10: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: isosorbide-propylene oxide 5 mol adduct: glycerol = 0.58:0.12:0.3, NCO/OH equivalent ratio = 1.7)

Except that 3.94 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 87 g and the amount of glycerol was changed from 1.84 g to 1.38 g, an isocyanate prepolymer composition was prepared in the same manner as in Example A1, and then an end-capping reaction was performed in the same manner as in Example A1, thereby obtaining 120 g of an end-capped isocyanate prepolymer composition.

Example A11: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: isosorbide-propylene oxide 5 mol adduct: glycerol = 0.42:0.08:0.5, NCO/OH equivalent ratio = 1.7)

Except that 2.62 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 63 g and the amount of glycerol was changed from 1.84 g to 2.30 g, an isocyanate prepolymer composition was prepared in the same manner as in Example A1, and then an end-capping reaction was performed in the same manner as in Example A1, thereby obtaining 110 g of an end-capped isocyanate prepolymer composition.

Example A12: Preparation of isocyanate prepolymer composition using a polyol composition comprising polytetrahydrofuran, isosorbide-propylene oxide 5 mol adduct and triethanolamine, and a polyisocyanate (OH equivalent ratio of polytetrahydrofuran: isosorbide-propylene oxide 5 mol adduct: triethanolamine = 0.5:0.1:0.4, NCO/OH equivalent ratio = 1.7)

Except that 3.28 g of the isosorbide-propylene oxide 5 mol adduct obtained in Preparation Example B2 was used instead of the isosorbide-ethylene oxide 5 mol adduct obtained in Preparation Example B1 and 2.98 g of triethanolamine was used instead of glycerol, an isocyanate prepolymer composition was prepared in the same manner as in Example A1, and then, except that 1.4 equivalents of 2-allyl phenol was used instead of t-butyl phenol, an end-capping reaction was performed in the same manner as in Example A1, thereby obtaining 110 g of an end-capped isocyanate prepolymer composition.

### Comparative Example A1: Preparation of isocyanate prepolymer using polytetrahydrofuran and polyisocyanate (NCO/OH equivalent ratio = 1.7)

Except that the isosorbide-ethylene oxide 5 mol adduct obtained in Preparation Example B1 and glycerol were not used, only 100 g of polytetrahydrofuran was used as a polyol component and the amount of isophorone diisocyanate was changed from 28.34 g to 18.9 g, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A2: Preparation of isocyanate prepolymer composition using a polyol composition comprising polytetrahydrofuran and glycerol, and a polyisocyanate (OH equivalent ratio of polytetrahydrofuran: glycerol = 0.6:0.4, NCO/OH equivalent ratio = 1.7)

Except that the isosorbide-ethylene oxide 5 mol adduct obtained in Preparation Example B1 was not used and the amount of polytetrahydrofuran was changed from 75 g to 90 g, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A3: Preparation of isocyanate prepolymer composition using a polyol composition comprising polypropylene glycol and glycerol, and a polyisocyanate (OH equivalent ratio of polypropylene glycol:glycerol = 0.6:0.4, NCO/OH equivalent ratio = 1.7)

Except that the isosorbide-ethylene oxide 5 mol adduct obtained in Preparation Example B1 was not used and 90 g of polypropylene glycol was used instead of polytetrahydrofuran, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A4: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.5:0.1:0.4, NCO/OH equivalent ratio = 1.5)

Except that the amount of isophorone diisocyanate was changed from 28.34 g to 25.01 g, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A5: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.5:0.1:0.4, NCO/OH equivalent ratio = 2.0)

Except that the amount of isophorone diisocyanate was changed from 28.34 g to 33.35 g, an isocyanate prepolymer composition was prepared in the same manner as in Example A1, and then an end-capping reaction was performed in the same manner as in Example A1, thereby obtaining 110 g of an end-capped isocyanate prepolymer composition.

Comparative Example A6: Preparation of isocyanate prepolymer composition using a polyol composition comprising polytetrahydrofuran, isosorbide-ethylene oxide 5 mol adduct and glycerol, and a polyisocyanate (OH equivalent ratio of polytetrahydrofuran:isosorbide-ethylene oxide 5 mol adduct:glycerol = 0.2:0.4:0.4, NCO/OH equivalent ratio = 1.7)

Except that the amount of the isosorbide-ethylene oxide 5 mol adduct obtained in Preparation Example B1 was changed from 2.78 g to 11.88 g, the amount of polytetrahydrofuran was changed from 75 g to 32 g, the amount of glycerol was changed from 1.84 g to 1.96 g, and the amount of isophorone diisocyanate was changed from 28.34 g to 30.23 g, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A7: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: isosorbide-propylene oxide 5 mol adduct: glycerol = 0.2:0.4:0.4, NCO/OH equivalent ratio = 1.7)

Except that 14.0 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 32 g, the amount of glycerol was changed from 1.84 g to 1.96 g and the amount of isophorone diisocyanate was changed from 28.34 g to 30.23 g, an isocyanate prepolymer composition was prepared in the same manner as in Example A1, and then an end-capping reaction was performed in the same manner as in Example A1, thereby obtaining 100 g of an end-capped isocyanate prepolymer composition.

Comparative Example A8: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: 5 mol isosorbide-propylene oxide adduct: glycerol = 0.55:0.05:0.4, NCO/OH equivalent ratio = 1.7)

Except that 1.75 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 88.0 g, the amount of glycerol was changed from 1.84 g to 1.96 g and the amount of isophorone diisocyanate was changed from 28.34 g to 30.23 g, an isocyanate prepolymer composition was prepared in the same manner as in Example A1, and then an end-capping reaction was performed in the same manner as in Example A1, thereby obtaining 140 g of an end-capped isocyanate prepolymer composition.

Comparative Example A9: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: isosorbide-propylene oxide 5 mol adduct: glycerol = 0.67:0.13:0.2, NCO/OH equivalent ratio = 1.7)

Except that 4.26 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 100.5 g and the amount of glycerol was changed from 1.84 g to 0.92 g, an isocyanate prepolymer composition was prepared in the same manner as in Example A1, and then an end-capping reaction was performed in the same manner as in Example A1, thereby obtaining 120 g of an end-capped isocyanate prepolymer composition.

Comparative Example A10: Preparation of isocyanate prepolymer composition using a polyol composition comprising polytetrahydrofuran, isosorbide-propylene oxide 5 mol adduct and glycerol, and a polyisocyanate (OH equivalent ratio of polytetrahydrofuran: 5 mol isosorbide-propylene oxide adduct: glycerol = 0.33:0.07:0.6, NCO/OH equivalent ratio = 1.7)

Except that 2.3 g of the isosorbide-propylene oxide 5 mol adduct obtained in Preparation Example B2 was used instead of the isosorbide-ethylene oxide 5 mol adduct obtained in Preparation Example B1, the amount of polytetrahydrofuran was changed from 75 g to 49.5 g and the amount of glycerol was changed from 1.84 g to 2.76 g, an isocyanate prepolymer composition was prepared in the same manner as in Example A1, and then an end-capping reaction was performed in the same manner as in Example A1, thereby obtaining 110 g of an end-capped isocyanate prepolymer composition.

### <Preparation of epoxy resin composition>

### Examples B1 to B12 and Comparative Examples B1 to B10: Preparation of epoxy resin composition

3.0 g of diglycidyl ether of bisphenol A (DGEBA)-based epoxy resin (YD-128, Kukdo Chemical Co., Ltd.) as an epoxy resin, 0.45 g of a curing agent for epoxy resin (dicyandiamide (DICY), Evonik Co., Ltd., Dicyanex 1400F) and 0.05 g of a curing promotor for epoxy resin (urea derivative (DIURON), Evonik Co., Ltd., Amicure UR-D) which were stable at room temperature and to induce a curing reaction at high temperature, 1.0 g of calcium carbonate having a particle size of 21 to 33 µm (CaCO₃, OMYA Co., Ltd., OMYACARB 30-CN) as a filler, 3.0 g of a core-shell rubber (KANEKA Co., Ltd., MX-154) as an additional impact modifier, and each of the end-capped isocyanate prepolymer compositions obtained in Examples A1 to A12 and Comparative Examples A1 to A10 was used in an amount of 2.5 g as a polyurethane-based impact modifier.

Epoxy resin compositions of Examples B1 to B12 and Comparative Examples B1 to B10 were prepared by mixing the epoxy resin, curing agent, curing promotor, filler, additional core-shell type impact modifier, and polyurethane-based impact modifier with the compositional ratios shown in Table 1 below.

Specifically, epoxy resin compositions were prepared by adding the epoxy resin, curing agent, curing promotor, filler, additional core-shell type impact modifier, and polyurethane-based impact modifier to a paste mixer and mixing them for 15 minutes.

**[Table 1] (amount unit: g)**

| | | Example | | | | | | | | | | | |
|---|---|---|---|---|---|---|---|---|---|---|---|---|---|
| | | B1 | B2 | B3 | B4 | B5 | B6 | B7 | B8 | B9 | B10 | B11 | B12 |
| | Epoxy resin | YD-128 (3.0) | | | | | | | | | | | |
| | Curing agent | Dicyanex 1400F (0.45) | | | | | | | | | | | |
| Component (amount) | Curing promotor | Amicure UR-D (0.05) | | | | | | | | | | | |
| | Filler | Calcium carbonate (1.0) | | | | | | | | | | | |
| | Core-shell type impact modifier | Core-shell rubber (3.0) | | | | | | | | | | | |
| | Polyurethane-based impact modifier | Ex. A1 (2.5) | Ex. A2 (2.5) | Ex. A3 (2.5) | Ex. A4 (2.5) | Ex. A5 (2.5) | Ex. A6 (2.5) | Ex. A7 (2.5) | Ex. A8 (2.5) | Ex. A9 (2.5) | Ex. A10 (2.5) | Ex. All (2.5) | Ex. A12 (2.5) |

**[Table 1] (continued) (amount unit: g)**

| | | Comparative Example | | | | | | | | | |
|---|---|---|---|---|---|---|---|---|---|---|---|
| | | B1 | B2 | B3 | B4 | B5 | B6 | B7 | B8 | B9 | B10 |
| | Epoxy resin | YD-128 (3.0) | | | | | | | | | |
| | Curing agent | Dicyanex 1400F (0.45) | | | | | | | | | |
| Component (amount) | Curing promotor | Amicure UR-D (0.05) | | | | | | | | | |
| | Filler | Calcium carbonate (1.0) | | | | | | | | | |
| | Core-shell type impact modifier | Calcium carbonate (3.0) | | | | | | | | | |
| | Polyurethane-based impact modifier | C.Ex. A1 (2.5) | C.Ex. A2 (2.5) | C.Ex. A3 (2.5) | C.Ex. A4 (2.5) | C.Ex. A5 (2.5) | C.Ex. A6 (2.5) | C.Ex. A7 (2.5) | C.Ex. A8 (2.5) | C.Ex. A9 (2.5) | C.Ex. A10 (2.5) |

### <Evaluation of physical properties of epoxy resin composition>

Each of the epoxy resin compositions prepared in Examples B1 to B12 and Comparative Examples B1 to B10 was used as adhesive, and the physical properties of the bonded specimens were measured using the following methods. The results are shown in Table 2.

### (1) Evaluation of T-peel strength (unit: N/25 mm)

T-Peel strength was measured according to ASTM D-1876. A total of five measurements were taken for each specimen, and the average value was calculated.

### (2) Evaluation of impact strength at room temperature (unit: N/mm)

Impact strength at room temperature was measured according to ISO 11343. A total of five measurements were taken for each specimen, and the average value was calculated.

### [Explanation on components]

- PTG: Polytetrahydrofuran
- PPG: Polypropylene Glycol
- Prep.Ex. B1: Isosorbide-ethylene oxide 5-mol adduct prepared in Preparation Example B1
- Prep.Ex. B2: Isosorbide-propylene oxide 5-mol adduct prepared in Preparation Example B2
- IPDI: Isophorone diisocyanate
- Gly: Glycerol
- TEA: Triethanolamine

**[Table 2]**

| | | Polyol (OH equivalent ratio) | | | | | | Polyisocyanate (NCO/OH equivalent ratio) | Property | |
|---|---|---|---|---|---|---|---|---|---|---|
| | | PTG | PPG | Prep.Ex. B1 | Prep.Ex. B2 | Gly | TEA | IPDI | T-peel strength (N/25mm) | Impact strength at room temperature (N/mm) |
| | B1 | 0.5 | - | 0.1 | - | 0.4 | - | 1.7 | 372.4 | 45.1 |
| | B2 | 0.3 | - | 0.3 | - | 0.4 | - | 1.7 | 386.1 | 44.2 |
| | B3 | 0.5 | | 0.1 | - | 0.4 | - | 1.9 | 376.7 | 43.7 |
| | B4 | 0.5 | - | - | 0.1 | 0.4 | - | 1.7 | 388.1 | 45.3 |
| | B5 | 0.3 | - | - | 0.3 | 0.4 | - | 1.7 | 368.9 | 42.9 |
| E x a m p l e s | B6 | 0.5 | - | - | 0.1 | 0.4 | - | 1.9 | 364.8 | 43.3 |
| | B7 | 0.5 | - | - | 0.1 | 0.4 | - | 1.6 | 385.2 | 42.6 |
| | B8 | - | 0.5 | 0.1 | - | 0.4 | - | 1.7 | 371.4 | 42.1 |
| | B9 | - | 0.5 | - | 0.1 | 0.4 | - | 1.7 | 366.5 | 41.6 |
| | B10 | 0.58 | - | - | 0.12 | 0.3 | - | 1.7 | 376.1 | 40.7 |
| | B11 | 0.42 | - | - | 0.08 | 0.5 | - | 1.7 | 364.3 | 41.1 |
| | B12 | 0.5 | - | - | 0.1 | - | 0.4 | 1.7 | 360.5 | 41.3 |
| | B1 | 1.0 | - | - | - | - | - | 1.7 | Surface peeling | Unstable crack |
| | B2 | 0.6 | - | - | - | 0.4 | - | 1.7 | 335.1 | 40.8 |
| | B3 | - | 0.6 | - | - | 0.4 | - | 1.7 | 314.5 | 32.4 |
| | B4 | 0.5 | - | 0.1 | - | 0.4 | - | 1.5 | 309.4 | 29.4 |
| C o m p. E x a m p l e s | B5 | 0.5 | - | 0.1 | - | 0.4 | - | 2.0 | 286.0 | Unstable crack |
| | B6 | 0.2 | - | 0.4 | - | 0.4 | - | 1.7 | 304.0 | 33.5 |
| | B7 | 0.2 | - | - | 0.4 | 0.4 | - | 1.7 | 311.6 | 32.8 |
| | B8 | 0.55 | - | - | 0.05 | 0.4 | - | 1.7 | 280.4 | 17.5 |
| | B9 | 0.67 | - | - | 0.13 | 0.2 | - | 1.7 | 245.1 | Unstable crack |
| | B10 | 0.33 | - | - | 0.07 | 0.6 | - | 1.7 | 230.8 | 23.4 |
| - Surface peeling: The phenomenon of the adhesive interface being peeled off | | | | | | | | | | |
| - Stable crack: Indicating a case where, when measuring impact strength at room temperature, when an impact is applied, the Y-axis (N) of the impact strength measurement graph rises to approximately 40 N and then drops to 20 N, withstanding the impact for approximately 10 ms | | | | | | | | | | |
| - Unstable crack: Indicating a case where, when measuring impact strength at room temperature, when an impact is applied, the Y-axis (N) of the impact strength measurement graph rises to approximately 40 N and then drops to 0 N immediately, being unable to withstand the impact | | | | | | | | | | |

As shown in Table 2 above, in the case of Examples B1 to B12 according to the present invention, the adhesive strength was excellent with a T-peel strength of 360 N/25 mm or more, and at the same time, the impact strength at room temperature was also excellent with an impact strength of 40 N/mm or more.

However, in Comparative Example B1 where polyether polyol was used alone as the polyol component, surface peeling occurred in the adhesive specimen, and unstable crack occurred during the measurement of impact strength at room temperature, resulting in very poor impact resistance. In addition, in Comparative Examples B2 and B3 where anhydrosugar alcohol-alkylene glycol was not used as the polyol component, the T-peel strength decreased, resulting in poor adhesiveness.

In Comparative Example B4, the viscosity was too high, so the viscosity of the epoxy resin composition was increased, resulting in a low T-peel strength, which resulted in very poor adhesion, and the impact strength at room temperature was also reduced, resulting in poor impact resistance. On the other hand, in Comparative Example B5, the viscosity was too low, so the viscosity of the epoxy resin composition was reduced, resulting in a low T-peel strength, which resulted in very poor adhesion, and unstable crack occurred during the measurement of impact strength at room temperature, resulting in very poor impact resistance.

In Comparative Examples B6 and B7, the T-peel strength was reduced, resulting in poor adhesion, and the impact strength at room temperature was also reduced, resulting in poor impact resistance. Furthermore, in Comparative Example B8, the T-peel strength was reduced, resulting in very poor adhesion, and the impact strength at room temperature was also seriously reduced, resulting in very poor impact resistance.

In Comparative Example B9, the addition of insufficient glycerol to the reaction reduced intermolecular entanglement, resulting in poor physical properties. On the other hand, in Comparative Example B 10, the increased intermolecular entanglement resulted in an excessively high viscosity of the polyurethane itself, resulting in poor T-peel strength and poor impact strength at room temperature.

## Claims

1. An isocyanate prepolymer composition prepared by urethane reaction of a polyol composition comprising anhydrosugar alcohol-alkylene glycol, polyether polyol and trihydric or higher polyhydric alcohol with polyisocyanate,
wherein, based on the total OH equivalent of the polyol composition,
the OH equivalent ratio of the anhydrosugar alcohol-alkylene glycol is more than 0.05 and less than 0.4,
the OH equivalent ratio of the polyether polyol is more than 0.2 and less than 0.6, and the OH equivalent ratio of the trihydric or higher polyhydric alcohol is more than 0.2 and less than 0.6, and
the NCO equivalent ratio of the polyisocyanate to the total OH equivalent of the polyol composition (total NCO equivalent/total OH equivalent) is more than 1.5 and less than 2.0.

2. The isocyanate prepolymer composition of claim 1, wherein the anhydrosugar alcohol-alkylene glycol is an adduct obtained by reacting hydroxyl group(s) at one end or both ends of anhydrosugar alcohol with alkylene oxide.

3. The isocyanate prepolymer composition of claim 1, wherein the anhydrosugar alcohol is dianhydrohexitol.

4. The isocyanate prepolymer composition of claim 1, wherein the alkylene oxide is a linear alkylene oxide having 2 to 8 carbons or a branched alkylene oxide having 3 to 8 carbons.

5. The isocyanate prepolymer composition of claim 1, wherein the polyether polyol comprises one or more selected from the group consisting of polyalkylene glycol, polytetrahydrofuran, or combination thereof.

6. The isocyanate prepolymer composition of claim 1, wherein the trihydric or higher polyhydric alcohol is one or more selected from the group consisting of glycerol, trimethylolpropane, triethanolamine, pentaerythritol, xylitol, sorbitol, or combination thereof.

7. A method for preparing an isocyanate prepolymer composition, comprising a step of urethane reaction of a polyol composition comprising anhydrosugar alcohol-alkylene glycol, polyether polyol and trihydric or higher polyhydric alcohol with polyisocyanate, wherein, based on the total OH equivalent of the polyol composition,
the OH equivalent ratio of the anhydrosugar alcohol-alkylene glycol is more than 0.05 and less than 0.4,
the OH equivalent ratio of the polyether polyol is more than 0.2 and less than 0.6, and the OH equivalent ratio of the trihydric or higher polyhydric alcohol is more than 0.2 and less than 0.6, and
the NCO equivalent ratio of the polyisocyanate to the total OH equivalent of the polyol composition (total NCO equivalent/total OH equivalent) is more than 1.5 and less than 2.0.

8. An end-capped isocyanate prepolymer composition prepared by reaction of the isocyanate prepolymer composition of any one of claims 1 to 6 with an end-capping agent.

9. The end-capped isocyanate prepolymer composition of claim 8, wherein the end-capping agent is one or more selected from the group consisting of phenolic compound, triazine compound, alcohol compound, amine compound, benzene compound, dicarboxylic acid ester compound, novolac compound, or combination thereof.

10. An impact modifier comprising the end-capped isocyanate prepolymer composition of claim 8.

11. An epoxy resin composition comprising the impact modifier of claim 10; and epoxy resin.

12. The epoxy resin composition of claim 11, wherein the epoxy resin is selected from the group consisting of bisphenol A-epichlorohydrin resin, diglycidyl ether of bisphenol A resin, novolac type epoxy resin, alicyclic epoxy resin, aliphatic epoxy resin, heterocyclic epoxy resin, glycidyl ester type epoxy resin, brominated epoxy resin, bio-derived epoxy resin, epoxidized soybean oil or combination thereof.

13. The epoxy resin composition of claim 11, further comprising one or more selected from curing agent, curing promotor, filler, adhesion promotor or combination thereof.

14. The epoxy resin composition of claim 11, further comprising additive component selected from the group consisting of antioxidant, UV absorber, resin modifier, silane coupling agent, diluent, colorant, defoaming agent, antifoaming agent, dispersant, viscosity modifier, gloss modifier, wetting agent, conductivity-imparting agent, or combination thereof.

15. An adhesive comprising the epoxy resin composition of claim 11.
